# EUROPEAN PATENT APPLICATION

(11) **EP 2 072 601 A1**
(43) Date of publication of application: **24.06.2009**
(21) Application number: 07123674.9
(22) Date of filing: 19.12.2007
(51) Int. Cl.: C10G 7/04, C10G 7/06, B01D 17/02

(54) **Apparatus and method for drying biodiesel**

(71) Applicant: Archimede Ricerche SRL, 16100 Genova (IT)
(72) Inventor: Parodi, Augusto, 16167, Genova (IT); Marini, Leandro, 16014, Ceranesi (GE) (IT)
(74) Representative: Gervasi, Gemma

(57) **Abstract**

The present invention refers to an apparatus and a method for the removal from biodiesel of excess water resulting from hygroscopic absorption during transport or storage. The apparatus is compact, can be transported on a mobile base and can be connected directly to a warehouse for decontamination of the extracted water by means of decanting or recycling.
The apparatus for drying biodiesel comprises:
- a device (2) for extraction of the biodiesel from a warehouse (1);
- an evaporation circuit comprising a return pipe (3), heat exchangers (3c and 3e) and a flash reactor (4);
- a condenser (5) to condense waste vapours;
- a collector for the waste vapours (6) condensed in the condenser (5); and
- a centrifugal pump (5c) for elimination of the waste vapours.

## Description

### Field of application

The present invention refers to an apparatus and a method for removing from biodiesel excess water resulting from hygroscopic absorption that occurs during transport or storage.

### State of the Art

Biodiesel is a type of diesel deriving from agricultural products and since it is produced with rape seed and sunflower oil, for example, it is biodegradable and safe. This product allows for the reduction of polluting emissions into the atmosphere, in particular its lack of sulphur permits the gradual elimination of said substance as the main cause of the formation of acid rain. Another important aspect from the ecological point of view is the amount of carbon dioxide released by biodiesel during combustion which corresponds the amount absorbed by the plants during their growth, thereby avoiding the net accumulation of carbon dioxide, the cause of the greenhouse effect. The use of biodiesel has no negative effects in terms of engine operation and wear, and performance is on a par with that obtained with traditional diesel (consumption is in line with the levels specified by the manufacturers), permitting efficiency and reliability. Comparison of performance with mineral diesel, with the engine at full power on a test bench, indicates a reduction in smokiness due to the absence of aromatic compounds.

The absence of sulphur oxide makes catalytic converters more efficient, obtaining a significant reduction in the emission of non-combusted hydrocarbons.

Biodiesel has a much higher evaporation point than that of mineral diesel and increases the volume of the lubricating oil, maintaining it constant over higher mileage with reduction of consumption, while the TBN, ashes and flash point are practically unchanged. The low ash content, in particular the absence of vanadium oxides present in mineral diesel, eliminates the risk of corrosion at high temperatures. Monitoring performed on boilers did not highlight any particular problems.

Due to its characteristics, biodiesel is now used in bus, tractor and lorry engines and in heating systems. An increasing number of municipalities and transport firms are using this product to reduce polluting emissions.

The production of biodiesel in Europe in 2006 was 4,890,000 tons and the figure has continuously increased: +21% in 2003; + 29% in 2004; +66 in 2005; +52% in 2006.
For years Italy was the third biggest producer after Germany and France but in 2006 it moved up to second place, overtaking France, with a production of 384,420 toe (1 ton of biodiesel is equivalent to 0.86 tons of oil equivalent).
The European and related Italian regulations (finance law 2007 and relative implementation decrees) establish that as from 2008 the petroleum companies must add to their fossil fuels a quantity of biofuels (biodiesel and bioethanol) equal to 2% of the quantity of diesel and petrol produced the previous year, increasing to 5% in 2009 and 10% in 2020.
Assessing the quantities of biodiesel required by the petroleum companies to meet the above biofuel obligations, Italy alone, for 2008 only, requires 880,000 tons of biodiesel-bioethanol, and in view of the fact that production of bioethanol in the country continues to be low, this requirement is met mainly by the production of biodiesel.

In Europe there are countries in which the production of biodiesel is almost equal to the production capacity (Germany, France) and countries, like Italy, where production is approximately 50% of the potential. Biodiesel is obtained by transesterification of vegetable oils; on average the cost of production of biodiesel is 785 euro/ton with raw material costs accounting for 89% of the total.

At present Italian production is provided mainly by national operators, the vast majority of whom use vegetable oils from outside the EU, but biodiesel is already being directly imported from non-EU countries where the production cost is highly competitive and remains so even when transport costs are added (Argentina, United States, Brazil, Indonesia and Malaysia).

Biodiesel from outside the EU arrives by ship and since it is a hygroscopic product, during loading and unloading and during the voyage it tends to absorb humidity. Upon arrival at the port, where it is stored in warehouses, it is no longer compliant with requirements (UNI EN 14214) since, according to said requirements, as shown in the table, the water content must not exceed 500 mg/kg. This will be lowered in the near future to 200 mg/kg.
The problem also exists for prolonged storage of national non-imported products when they are stored outside the factory and transport to the factory of origin for drying in a dryer is not feasible.

Currently the biodiesel imported from non-EU countries is very competitively priced compared to the biodiesel produced in Italy. The price of the oil produced in Italy and the European Union as in the rest of the world during 2007 increased by 30-40%, and if the processing costs are added, the biodiesel produced in countries like Malaysia, Indonesia, United States or Argentina and then imported into Italy is more competitive. This means that imported products are on the increase and that therefore the problem of excessive water content is also growing.

### Summary of the Invention

On the basis of the problems listed above, this patent stems from the need to eliminate the water absorbed by the biodiesel in the various transfer operations from non-EU countries and otherwise, or due to prolonged storage times, for the purpose of ensuring compliance thereof with the EU requirements (UNI EN 14214) listed below:

| **Characteristic** | **Unit** | **Values** | |
|---|---|---|---|
| | | **Min** | **Max** |
| Ester content | % (m/m) | 96.5 | |
| Density at 15°C | kg/m^3 | 860 | 900 |
| Viscosity at 40°C | mm^2/s | 3.50 | 5.0 |
| Flash point | °C | 120 | |
| Sulphur | mg/kg | | 10. |
| Carbon residue | %(m/m) | | 0.30 |
| Cetane number | | 51.0 | |
| Sulphurated ash | %(m/m) | | 0.02 |
| Water content | mg/kg | | 500 |
| Total contamination | mg/kg | | 24 |
| Corrosion on copper | | Class 1 | |
| Stability to oxidisation, 110°C | h (hours) | 6.0 | |
| Acidity | mg KOH/g | | 0.5 |
| Iodine number | g I2/100 g | | 120 |
| Linolenic acid methyl ester | %(m/m) | | 12.0 |
| Polyunsaturated methyl esters >= 4 double bonds | %(m/m) | | 1 |
| Methyl alcohol | %(m/m) | | 0.20 |
| Monoglycerides | %(m/m) | | 0.80 |
| Diglycerides | %(m/m) | | 0.20 |
| Triglycerides | %(m/m) | | 0.20 |
| Free glycerol | %(m/m) | | 0.02 |
| Total glycerol | %(m/m) | | 0.25 |
| Metals group I (Na+K) | mg/kg | | 5.0 |
| Metals group II (Ca+Mg) g) | mg/kg | | 5.0 |
| Phosphorous | mg/kg | | 10.0 |

Said object is achieved by means of the plant as claimed in claim 1 and the relative method of use as claimed in claim 10. The dependent claims define further advantageous aspects of the invention.

### Detailed Description of the Invention

The mobile biodiesel drying apparatus according to the present invention comprises:
- a device (2) for extraction of the biodiesel from the warehouse (1)
- an evaporation circuit comprising a return pipe (3), heat exchangers (3c and 3e) and a flash reactor (4)
- a heat exchanger (5) to condense the waste vapours
- a collector for the waste vapours (6) condensed in the heat exchanger (5) and eliminated from the cycle via a centrifugal pump (5c).

The apparatus of the present invention is a small apparatus that can be transported on a mobile base and can be connected directly to the warehouse for decontamination of the water by means of decanting or recycling. The advantages of the plant according to the present invention are the following:
- Elimination of the water from the biodiesel directly in the warehouse,
- Mobile apparatus,
- Small size,
- Low running cost,
- Maximum dependability and simple management,
- Liquid effluents reduced solely to the water and methyl alcohol
- Gaseous effluent reduced to degassing air enriched with nitrogen
- Process temperatures below 120°C, and
- Thermal efficiency more than 80%.

The present invention allows for reduction of the water content of biodiesel, for example when the latter arrives by ship from non-EU countries, without loss of the biofuel in the drying process.

The operating cycle is continuous and, by appropriate management of temperature and pressure, brings the biodiesel back within regulatory requirements. This is achieved via a series of stages in which the product passes from ambient temperature to higher temperatures, followed by a rapid reduction in pressure (drying phase). As the product thus obtained leaves the cycle, it releases heat to the new incoming product.

The plant permits extraction of the water from the biodiesel via one or more extraction cycles.
This is performed by a centrifugal pump 3b which takes the biodiesel from the warehouse and pumps it into the apparatus, directing the biodiesel first to a heat generator and then to a flash reactor 4. This cycle can be repeated until the required reduction in water content is obtained.

The biodiesel is heated by heat exchangers 3c-3e which operate at a temperature of 60-120°C and then convey the biodiesel into the flash reactor 4.

Here, by means of the nozzle 4a positioned at the inlet of the flash reactor 4, the water is vaporised and thus eliminated.

To optimise the evaporation process, the flash reactor 4 operates in a vacuum, by means of a vacuum pumping unit. The water in the form of vapour is directed to a condenser 5 cooled by a cooling device 5b to a temperature of between -5 and 5 °C.
The temperature reduction of the vapour prevents harmful emissions and allows it to condense to water.

The entire biodiesel drying process is controlled by a central control unit which allows for separate management of each single cycle via modification of the parameters and operating conditions for each fraction of biodiesel.

The duration of each single process and the number of cycles to which each biodiesel fraction is subject depend on the quantity and quality of biodiesel introduced into the evaporation circuit.

### Description of the Figures

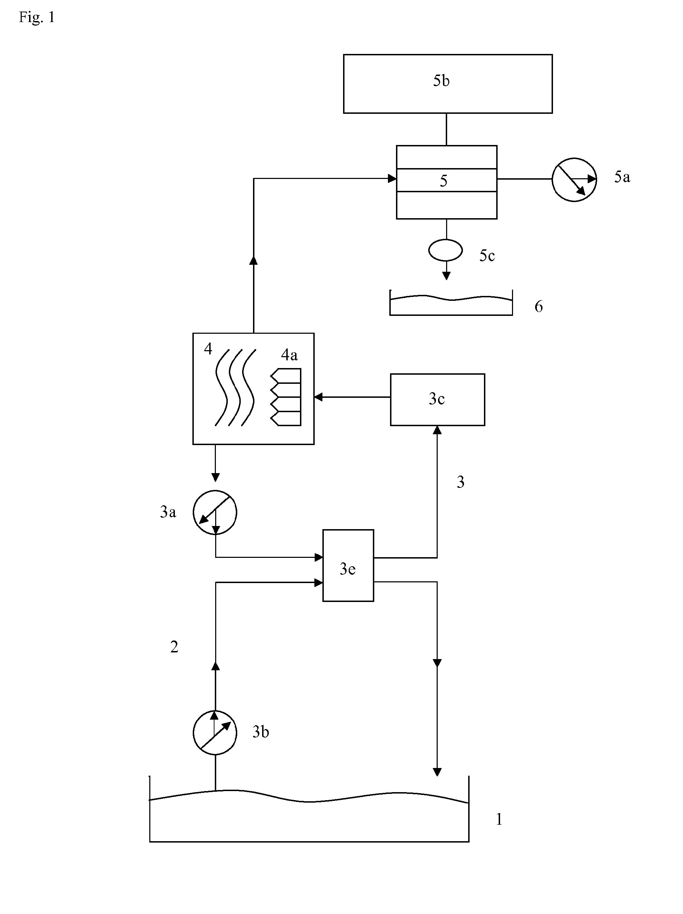

Figure 1 shows a block diagram of the plant subject of the present invention, representing a simplified view of the essential parts.

The biodiesel to be treated is extracted from the warehouse 1 by means of a centrifugal pump 3b and fed into a pipe which conveys it to the first recovery heat exchanger 3e, then to the exchanger 3c for further heating and then to the flash reactor 4.

A vacuum pump facilitates the evaporation operation 5a. After passing into the flash reactor, if the biodiesel has lost enough water to bring it back within the requirements it leaves the cycle via the pump 3a, otherwise it is re-circulated.

The evaporated water is cooled and condensed by a condenser 5 connected to a refrigeration unit 5b and then discharged 6 by means of an extraction centrifugal pump 5c.

## Claims

1. Mobile apparatus for drying biodiesel comprising:
• a device (2) for extraction of the biodiesel from a warehouse (1);
• an evaporation circuit comprising a return pipe (3), heat exchangers (3c and 3e) and a flash reactor (4);
• a condenser (5) to condense waste vapours;
• a collector for the waste vapours (6) condensed in the condenser (5); and
• a centrifugal pump (5c) for elimination of the waste vapours.

2. Apparatus as claimed in claim 1, wherein the device (2) for extraction of the biodiesel is a centrifugal pump (3b).

3. Apparatus as claimed in claims 1 and 2 wherein the return pipe (3) is provided with a centrifugal pump (3a).

4. Apparatus as claimed in claims 1 to 3, wherein the flash reactor (4) has, in the biodiesel inlet position, a nozzle (4a) with tangential flow to facilitate detachment of water vapours.

5. Apparatus as claimed in claims 1 to 4 wherein the condenser is connected to the flash reactor (4) and a vacuum pump (5a).

6. Apparatus as claimed in claims 1 to 5 wherein the condenser (5) is connected to a refrigeration unit (5b).

7. Apparatus as claimed in claims 1 to 6 wherein the collector for the waste vapours (6) is connected to the condenser (5) by means of an extraction centrifugal pump (5c).

8. Apparatus as claimed in claims 1 to 7 wherein the apparatus is positioned on a mobile base.

9. Apparatus as claimed in claims 1 to 8 wherein the apparatus is provided with a central control unit which controls operation of the apparatus.

10. Biodiesel drying process comprising the following steps:
• pumping of the biodiesel from a warehouse;
• heating of the biodiesel;
• evaporation of water in a flash reactor (4);
• cooling of the biodiesel flowing out; and
• cooling of water vapour and elimination thereof by extraction with a centrifugal pump (5c).

11. Process as claimed in claim 10 wherein the biodiesel is heated and brought to a temperature of between 60 and 120°C.

12. Process as claimed in claims 10 and 11 wherein the biodiesel is heated and placed in a vacuum to facilitate evaporation.

13. Process as claimed in claims 10 - 12 wherein the evaporated water is then cooled to prevent emissions.

14. Drying process as claimed in claim 13 wherein the water vapour is cooled and condensed to a temperature of between -5 and 5°C.
